# NEW EUROPEAN PATENT SPECIFICATION

(11) **EP 1 971 520 B2**
(45) Date of publication and mention of the opposition decision: **18.11.2020**
(45) Mention of the grant of the patent: 17.11.2010
(21) Application number: 06847437.8
(22) Date of filing: 11.01.2006
(51) Int. Cl.: B64C 3/00

(54) **AIRCRAFT WING COMPOSED OF COMPOSITE AND METAL PANELS**
AUS VERBUNDPLATTEN UND METALLPLATTEN ZUSAMMENGESETZTE FLUGZEUGTRAGFLÄCHE
AILE D'AÉRONEF COMPOSÉE DE PANNEAUX COMPOSITES ET MÉTALLIQUES

(43) Date of publication of application: 24.09.2008
(73) Proprietor: The Boeing Company, Chicago, IL 60606-1596 (US)
(72) Inventor: MUNSEN, Victor, A., Woodinville, WA 98072 (US); MCGINTY, Daniel, E., Redmond, WA 98052 (US); KORDEL, Jan, A., Sandringham, Victoria 3191 (AU); TANNER, Richard, B., Seattle, WA 98125 (US); RAMPTON, Scott, N., Bothel, WA 98012 (US); BURFORD, Ian, C., Duvall, WA 98019 (US); FOX, Bruce, R., Everett, WA 98208 (US); KELLY, James, M., Maryville, WA 98270 (US); JOHNSON, Miles, O., Brier, WA 98036 (US)
(74) Representative: Witte, Weller & Partner Patentanwälte mbB
(86) International application number: PCT/US2006/001017
(87) International publication number: WO 2007/091990

(56) References cited:
- EP-A2- 0 732 262
- EP-A2- 1 070 661
- WO-A2-2005/110842
- US-A- 4 749 155
- US-A- 5 806 798
- US-B1- 6 375 120
- US-B2- 6 808 143
- Airframe Structural Design: Practical Design Information and Data on Aircraft Structures, Michael Chun-Yung Niu, Conmilit Press Ltd., 1988
- Composite Airframe Structures: Practical Design Information and Data, Michael Chun-Yung Niu, Conmilit Press Ltd., 1992

## Description

### FIELD OF THE INVENTION

This invention relates generally to aircraft wing assemblies, and more specifically, to aircraft wing assemblies having both composite and metal panels.
Such wing assemblies are disclosed in the European patent application EP 0 732 262 A2.

### BACKGROUND OF THE INVENTION

Wing assemblies of conventional modem commercial aircraft generally include a wing box made from aluminum panels, spars, and ribs. Although desirable results have been achieved using prior art wing assemblies, there may be room for improvement. For example, the reduction of structural weight of an aircraft generally equates to better airplane performance. With respect to commercial aircraft, such improved performance has value in the marketplace. Composite materials have been examined as an alternative to aluminum, however, composite materials are generally expensive in comparison with aluminum, and may not be well suited for carrying high compressive loads experienced in certain circumstances.

### SUMMARY OF THE INVENTION

It is an object of the present invention to provide an improved wing.
This object is solved by a wing assembly for use on an aircraft, comprising: a support structure having a first end portion adapted to be coupled to the aircraft, an upper panel assembly and a pair of upper spar chords formed from a metal material, the upper panel assembly being coupled to the support structure, a lower panel assembly and a pair of lower spar chords formed from a composite material, the lower panel assembly being coupled to the support structure, and a pair of interface portions, situated at opposing chordwise ends of the support structure, coupling each of the upper spar chords to the lower spar chords.

The present invention is directed to aircraft wings having both composite and metal panels. Embodiments of methods and systems in accordance with the present invention may advantageously provide substantial weight savings, more robust lightning/EME protection characteristics, better discreet source damage tolerance characteristics, and improved cost over competing prior art wing assemblies.

In one embodiment, a wing assembly includes a support structure having a first end portion adapted to be coupled to an aircraft, an upper panel assembly formed from a metal material and coupled to the support structure, and a lower panel assembly formed from a composite material and coupled to the support structure. The metal material may be aluminum, titanium, or any other suitable metal, and the composite material may be a carbon fiber reinforced plastic (CFRP) material or other suitable composite material. In an alternate embodiment, the upper panel assembly includes a downwardly depending first web portion positioned proximate the first end portion of the support structure, and the lower panel assembly includes an upwardly depending second web portion, the second web portion being proximate the first web portion, the wing assembly further comprising an interface member of an isolating material disposed between the first and second web portions, and at least one fastener coupling the second web portion, the interface member, and the first web portion to the support structure.

### BRIEF DESCRIPTION OF THE DRAWINGS

Preferred and alternate embodiments of the present invention are described in detail below with reference to the following drawings.

FIGURE 1 is a top elevational view of a wing assembly in accordance with an embodiment of the invention;

FIGURE 2 is an end cross-sectional view of the wing assembly of FIGURE 1 taken along line 2-2;

FIGURE 3 is an enlarged elevational view of an interface portion in accordance with an embodiment of the invention;

FIGURE 4 is a strain gradient of the interface portion of FIGURE 3; and

FIGURE 5 is a side elevation view of an aircraft having wing assemblies in accordance with another embodiment of the invention.

### DETAILED DESCRIPTION

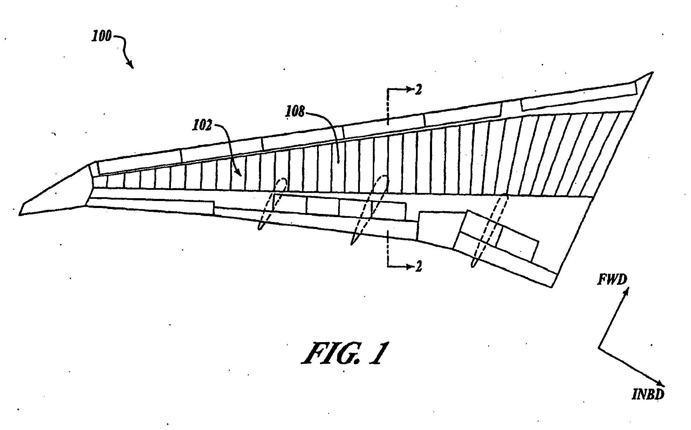

The present invention relates to wing assemblies for aircraft having both composite and metal panels. Many specific details of certain embodiments of the invention are set forth in the following description and in FIGURES 1-5 to provide a thorough understanding of such embodiments. One skilled in the art, however, will understand that the present invention may have additional embodiments, or that the present invention may be practiced without several of the details described in the following description.

In general, embodiments of the present invention provide wing assemblies having both composite and aluminum panels.
Such wing assemblies are known from the European patent application EP 0 732 262 A2, wherein the compression chord consists of metallic material and the tension chord consists of a fibrous composite material.
Certain composite materials, including carbon fiber reinforced plastic (CFRP) materials, perform well in tension and resist fatigue damage. Aluminum has relatively good compression properties but relatively lower tensile and fatigue performance. Thus, wing assemblies that include composite panels in areas that primarily experience tensile loads, and aluminum panels in other areas that primarily experience compression loads, may provide substantial weight reduction in comparison with prior art wing assemblies, and may provide a wing assembly that is lighter than either a fully aluminum built wing assembly or a full CFRP wing assembly.

A number of distinct complexities are encountered in the development of embodiments of wing assemblies having both CFRP panels and aluminum panel, including 1) galvanic corrosion at CFRP/aluminum interfaces, 2) different rates of thermally induced expansion and 3) incompatible strain limits of aluminum, and CFRP. These areas of concern are addresses in the present disclosure, and have been at least partially mitigated by embodiments of the present invention, as described more fully below.

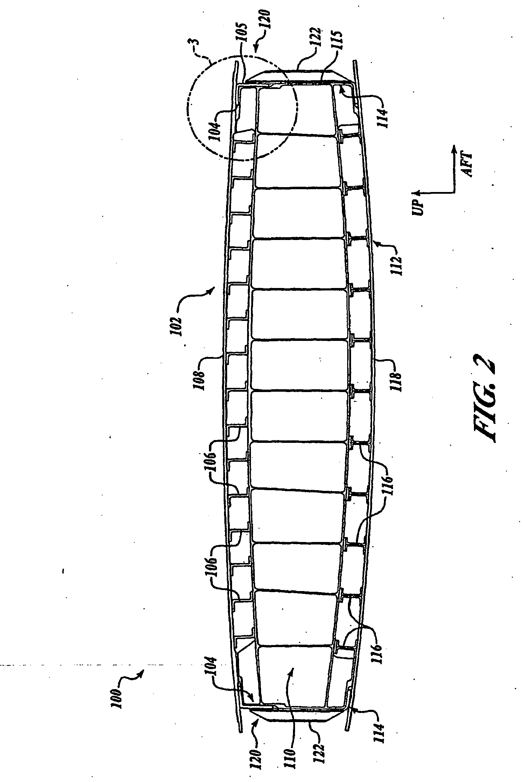

FIGURE 1 is a top elevational view of a wing assembly 100 in accordance with an embodiment of the invention. FIGURE 2 is an end cross-sectional view of the wing assembly 100 of FIGURE 1 taken along line 2-2. In this embodiment, the wing assembly 100 includes an upper panel assembly 102, and upper spar chords 104. The upper panel assembly 102 and the upper spar chords 104 are formed from aluminum or other suitable metal material, such as titanium. Similarly, the wing assembly 100 includes a lower panel assembly 112 and lower spar chords 114. The lower panel assembly 112 and the lower spar chords 114 are formed from a composite material, such as, for example, a CFRP.

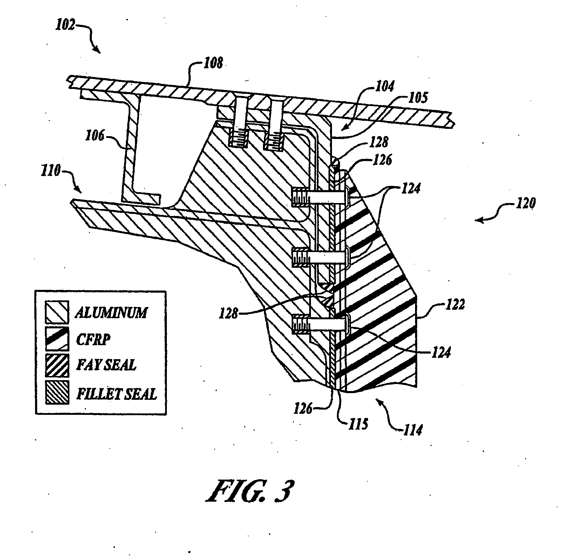

As shown in FIGURE 3, the upper panel assembly 102 includes an upper skin 108 and a plurality of upper web members 106. The web members 106 couple the upper skin 108 to a support structure 110 of the wing assembly 100. Similarly, the lower panel assembly 112 includes a lower skin 118 and a plurality of lower web members 116 that couple the lower skin 118 to the support structure 110.

A pair of interface portions 120 situated at opposing ends of the support structure 110 couple each of the upper spar chords 104 to the lower spar chords 114. More specifically, as best shown in FIGURE 3, the lower spar chord 114 includes a web portion 115 that extends upwardly to overlap with a downwardly extending web portion 105 of the upper spar chord 104. A rib member 122 extends upwardly along the web portions 105, 115 of the upper and lower spar chords 104, 114. An interface member 126 is disposed between the web portion 115 of the lower spar chord 114 and the web portion 105 of the upper spar chord 104, and also between the web portion 115 of the lower spar chord 114 and the support structure 110. In one embodiment, the interface member 126 is a fiberglass isolation ply material. A plurality of fasteners 124 pass through the rib portion 122, one or more of the web portions 105, 115 of the upper and lower spar chords 104, 114, and the interface member 126, securing these components to the support structure 110. In one embodiment, the fasteners 124 are titanium bolts. A plurality of fillet seal members 128 are disposed at various edges and intersections where a metal component (*e.g*. the upper spar chord 104 and the support structure 110) is adjacent to or sufficiently proximate to a composite component (*e.g*. the lower spar chord 114).

In one particular embodiment, to prevent galvanic corrosion of the metallic upper spar chord 104, the following features are incorporated: (1) the interface member 126 isolates the web portion 115 of the lower spar chord 114 from the web portion 105 of the upper spar chord 104, (2) the upper spar chord 104 is coated with one or more coats of a non-electrically conducting material, (3) the interface portion 120 is coated with a thin layer of sealant, and (4) the fasteners 124 are installed with a wet sealant, with insulative collars (not shown) on the side proximate the upper spar chord 104. In a further embodiment, the heads of the fasteners 124 may be cap sealed and the collars may be self-sealing. By ensuring that the composite materials are physically isolated from the metal materials, and by preventing the ingress of moisture at the interfaces, the threat of galvanic corrosion may be reduced or eliminated. Furthermore, the location of the interface portion 120 in an upper portion of the wing assembly 100 may serve to keep the joint out of any pooling moisture.

Composite materials (*e.g.* CFRP materials) and metal materials (*e.g*. aluminum) may exhibit significantly different rates of thermally-induced strain. Thus, a metallic upper panel assembly 102 attached to a composite material lower panel assembly 112 subject to thermal cycling will exhibit bending strains (tip up when cooled and tip down when heated). Swept wing aircraft will also experience wing twist as a geometric result of the thermal bending. This wing twist can be mitigated with non-swept wing configurations. The thermal loading must be accounted for in both static and fatigue evaluation of the wing box. These loads are generally additive to the mechanical loads.

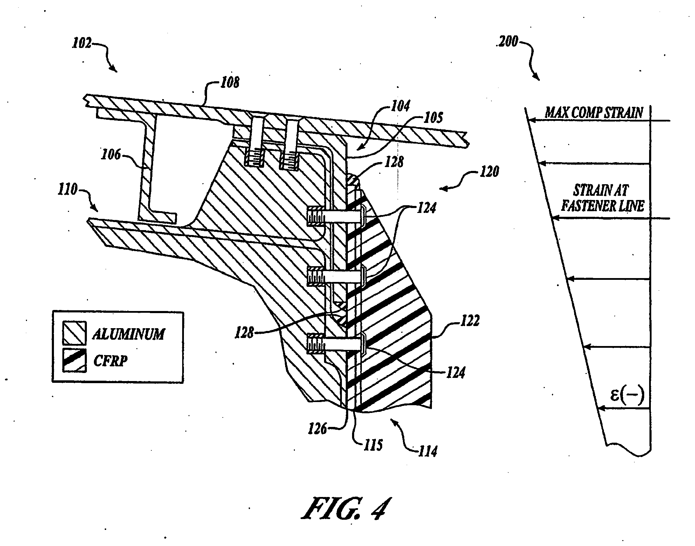

FIGURE 4 is a strain gradient 200 of the interface portion 120 of FIGURE 3. In one particular embodiment, where the upper panel assembly 102 is formed from aluminum and the lower panel assembly 112 is formed from a presently-preferred CFRP composite material, the compression axial strain limit for aluminum is about 0,007 cm/cm (0.007 in/in) while the strain limit for the presently-preferred composite including CFRP fibers loaded axially in compression is approximately 0,005 cm/cm (0.005 in/in). Thus, if the aluminum upper panel assembly 102 was attached to the CFRP lower panel assembly 112 at the area of maximum stress, the design of the aluminum panel would be limited by the strain cutoff of the CFRP and weight savings would not be achieved. FIGURE 4 shows that by attaching the two materials of the upper and lower spar chords 104, 114 that the peak CFRP axial strain is reduced appreciably at the joint. Further enhancement of the strain compatibility can be made by omission of axial fibers from the lower spar chord 114 (and the rib portion 122) in the area of high compressive axial strain. Thus, the two materials can be used in bending and still achieve the higher aluminum strain levels (and thus reducing weight). It will be appreciated that it may be desirable to locate the attachment of the two materials on the web portions 105, 115 of the upper and lower spar chords 104, 114 (*i.e*. closer to the neutral axis of the wing box), allowing the aluminum upper panel assembly 102 to realize its full strain potential while maintaining strain compatibility at the material interface. The thermal induced fatigue loads at the joint are also less due the location of the joint relative to the neutral axis.

Embodiments of the present invention may provide advantages over the prior art. For example, by configuring a wing box as described above, substantial weight savings may be realized. In some embodiments, it may be possible to achieve a weight savings such that embodiments of the present invention are lighter than an entirely-composite material (*e.g*. CFRP) wing box, and approximately 20% lighter than an all aluminum wing box. Additional benefits may include providing more robust lightning/EME protection characteristics than an entirely-composite material wing designs, and better discreet source damage tolerance than competing entirely-composite material concepts. Integration of the nacelle, side of body and main landing gear may also be simplified using embodiments of the present invention compared with an entirely-composite material design. An additional benefit is the cost advantage of the embodiments of the present invention compared to an entirely-composite material wing box design.

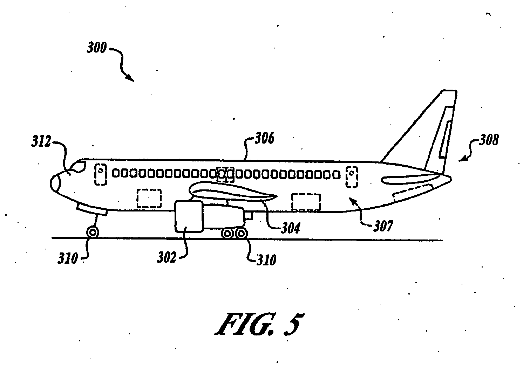

Embodiments of wing assemblies in accordance with the present invention may be used in a wide variety of different flight vehicles. For example, FIGURE 5 shows a side elevation view of an aircraft 300 having a pair of wing assemblies 304 in accordance with another embodiment of the present invention. The aircraft 300 generally includes one or more propulsion units 302 that are coupled to the wing assemblies 304, or alternately, to a fuselage 306, an airframe 307 disposed within the fuselage 306, or even other portions of the aircraft 300. Additionally, the aircraft 300 also includes a tail assembly 308 and a landing assembly 310 coupled to the fuselage 306 and/or to the airframe 307. The aircraft 300 further includes a variety of other systems and subsystems generally required for the proper operation of the aircraft 300. For example, the aircraft 300 includes a flight control system 312, as well as a plurality of other electrical, mechanical and electromechanical systems that cooperatively perform a variety of tasks necessary for the operation of the aircraft 300.

Although the aircraft 300 shown in FIGURE 3 is generally representative of a commercial passenger aircraft, including, for example, the 737, 747, 757, 767 and 777 commercial passenger aircraft available from The Boeing Company of Chicago, Illinois, in alternate embodiments, the present invention may also be incorporated into flight vehicles of other types. Examples of such flight vehicles may include manned or unmanned military aircraft, rotary wing aircraft, missiles, rockets, or ballistic flight vehicles, as illustrated more fully in various descriptive volumes, such as Jane's All The World's Aircraft, available from Jane's Information Group, Ltd. of Coulsdon, Surrey, UK.

## Claims

1. A wing assembly (100) for use on an aircraft (300), comprising:
a support structure (110) having a first end portion adapted to be coupled to the aircraft (300);
an upper panel assembly (102) and a pair of upper spar chords (104) extending in a spanwise direction, said upper panel assembly and each of said upper spar chords being mutually connected and formed from a metal material, the upper panel assembly (102) being coupled to the support structure (110);
a lower panel assembly (112) and a pair of lower spar chords (114) extending in a spanwise direction, said lower panel assembly and each of said lower spar chords being mutually connected and formed from a composite material, the lower panel assembly (112) being coupled to the support structure (110), and
a pair of interface portions (120), situated at opposing chordwise ends of the support structure (110), each interface portion (120) coupling one of the upper spar chords (104) to the corresponding lower spar chord (114).

2. The wing assembly of Claim 1, wherein the metal material includes at least one of aluminum and titanium, and wherein the composite material includes a carbon fiber reinforced plastic (CFRP) material.

3. The wing assembly of Claim 1, wherein the upper panel assembly (102) includes a downwardly depending first web portion (105) positioned proximate the first end portion of the support structure (110), and the lower panel assembly (112) includes an upwardly depending second web portion (115), the second web portion (115) being proximate the first web portion (105), the wing assembly further comprising an interface member (126) of an isolating material disposed between the first and second web portions (105, 115), and at least one fastener (124) coupling the second web portion (115), the interface member (126), and the first web portion (105) to the support structure (110).

4. The wing assembly of Claim 3, further comprising a rib member (122) extending along and coupled to at least one of the first and second web portions (105, 115).

5. The wing assembly of Claim 3, wherein the upper panel assembly (102) includes an upper spar chord (104) proximate the first end of the support structure (110), the first web portion (105) being a portion of the upper spar chord (104), and wherein the lower panel assembly (112) includes an lower spar chord (114), the second web portion (115) being a portion of the lower spar chord (114).

6. The wing assembly of Claim 3, wherein an upper skin (108) is coupled to the support structure (110) by a plurality of first web members (106), and a second skin (118) is coupled to the support structure (110) by a plurality of second web members (116).

7. The wing assembly of Claim 3, further comprising at least one fillet seal (128) disposed on at least one edge portion of at least one of the first and second web portions (105, 115).

8. The wing assembly of Claim 3, wherein the interface member (126) is formed of a fiberglass isolating ply material.

9. An aircraft, comprising:
a fuselage (306) having an airframe (307);
a propulsion unit (302) being coupled to at least one of the fuselage (308) and the airframe (307); and
a pair of wing assemblies according to claim 1.

## Patentansprüche

1. Flügelanordnung (100) zur Verwendung an einem Luftfahrzeug (300), die aufweist:
eine Haltestruktur (110) mit einem ersten Endabschnitt, der zur Kopplung an das Luftfahrzeug (300) angepasst ist;
eine obere Verkleidungsanordnung (102) und ein Paar oberer Holmprofilsehnen (104), die sich in einer Spannweitenrichtung erstrecken, wobei die obere Verkleidungsanordnung und jede der oberen Holmprofilsehnen gegenseitig verbunden sind und aus einem metallischen Material gebildet sind, wobei die obere Verkleidungsanordnung (102) an die Haltestruktur (110) gekoppelt ist;
eine untere Verkleidungsanordnung (112) und ein Paar unterer Holmprofilsehnen (114), die sich in der Spannweitenrichtung erstrecken, wobei die untere Verkleidungsanordnung und jede der unteren Holmprofilsehnen gegenseitig verbunden sind und aus einem Verbundwerkstoff gebildet sind, wobei die untere Verkleidungsanordnung (112) an die Haltestruktur (110) gekoppelt ist; und
ein Paar von Grenzflächenteilen (120), die sich bei in einer Sehnenrichtung gegenüberliegenden Enden der Haltestruktur (110) befinden, wobei jedes Grenzflächenteil (120) eine der oberen Holmprofilsehnen (104) mit der entsprechenden unteren Holmprofilsehne (114) verbindet.

2. Flügelanordnung nach Anspruch 1, wobei das metallische Material Aluminium und/oder Titan umfasst, und wobei das Verbundwerkstoffmaterial ein karbonfaserverstärktes Kunststoffmaterial (CFRP) umfasst.

3. Flügelanordnung nach Anspruch 1, wobei die obere Verkleidungsanordnung (102) einen nach unten gerichteten ersten Stegabschnitt (105) aufweist, der nahe dem ersten Endabschnitt der Haltestruktur (110) positioniert ist, und wobei die untere Verkleidungsanordnung (112) einen nach oben gerichteten zweiten Stegabschnitt (115) aufweist, wobei sich der zweite Stegabschnitt (115) nahe dem ersten Stegabschnitt (105) befindet, wobei die Flügelanordnung ferner ein Grenzflächenglied (126) aus einem isolierenden Material, das zwischen den ersten und zweiten Stegabschnitten (105, 115) angeordnet ist, und zumindest eine Befestigungseinrichtung (124) aufweist, die den zweiten Stegabschnitt (115), das Grenzflächenglied (126) und den ersten Stegabschnitt (105) an die Haltestruktur (110) koppelt.

4. Flügelanordnung nach Anspruch 3, die ferner ein Rippenglied (122) aufweist, das sich entlang des ersten Stegabschnitts (105) und/oder des zweiten Stegabschnitts (115) erstreckt und das an den ersten Stegabschnitt (105) und/oder den zweiten Stegabschnitt (115) gekoppelt ist.

5. Flügelanordnung nach Anspruch 3, wobei die obere Verkleidungsanordnung (102) eine obere Holmprofilsehne (104) nahe dem ersten Ende der Haltestruktur (110) aufweist, wobei der erste Stegabschnitt (105) ein Teil der oberen Holmprofilsehne (104) ist, und wobei die untere Verkleidungsanordnung (112) eine untere Holmprofilsehne (114) aufweist, wobei der zweite Stegabschnitt (115) ein Teil der unteren Holmprofilsehne (114) ist.

6. Flügelanordnung nach Anspruch 3, wobei eine obere Hülle (108) mittels einer Vielzahl von ersten Steggliedern (106) an die Haltestruktur (110) gekoppelt ist, und wobei eine zweite Hülle (118) mittels einer Vielzahl von zweiten Steggliedern (116) an die Haltestruktur (110) gekoppelt ist.

7. Flügelanordnung nach Anspruch 3, die ferner zumindest eine Hohlkehlendichtung (128) aufweist, die an zumindest einem ersten Randabschnitt des ersten und/oder zweiten Stegabschnitts (105, 115) angeordnet ist.

8. Flügelanordnung nach Anspruch 3, wobei das Grenzflächenglied (126) aus einem isolierenden Fiberglasschichtmaterial gebildet ist.

9. Luftfahrzeug, das aufweist:
einem Rumpf (306) mit einem Flugwerk (307);
einer Antriebseinheit (302), die an den Rumpf (308) und/oder an das Flugwerk (307) gekoppelt ist; und
einem Paar von Flügelanordnungen gemäß Anspruch 1.

## Revendications

1. Ensemble d'aile (100) à utiliser sur un aéronef (300), comprenant:
une structure de support (110) présentant une première partie d'extrémité conçue pour être couplée à l'aéronef (300);
un ensemble de panneaux supérieurs (102), et une paire de semelles de longeron supérieures (104) qui s'étendent dans le sens de l'envergure, ledit ensemble de panneaux supérieurs et chacune desdites semelles de longeron supérieures étant connectés mutuellement et étant formés à partir d'un matériau métallique, l'ensemble de panneaux supérieurs (102) étant couplé à la structure de support (110);
un ensemble de panneaux inférieurs (112), et une paire de semelles de longeron inférieures (114) qui s'étendent dans le sens de l'envergure, ledit ensemble de panneaux inférieurs et chacune desdites semelles de longeron inférieures étant connectés mutuellement et étant formés à partir d'un matériau composite, l'ensemble de panneaux inférieurs (112) étant couplé à la structure de support (110); et
une paire de parties d'interface (120) situées à des extrémités opposées dans le sens de la semelle de la structure de support (110), chaque partie d'interface (120) couplant une des semelles de longeron supérieures (104) à la semelle de longeron inférieure (114) correspondante.

2. Ensemble d'aile selon la revendication 1, dans lequel le matériau métallique comprend au moins un élément parmi l'aluminium et le titane, et dans lequel le matériau composite comprend une matière plastique renforcée par des fibres de carbone (CFRP).

3. Ensemble d'aile selon la revendication 1, dans lequel l'ensemble de panneaux supérieurs (102) comprend une première partie d'âme saillant vers le bas (105) qui est positionnée à proximité de la première partie d'extrémité de la structure de support (110), et l'ensemble de panneaux inférieurs (112) comprend une deuxième partie d'âme saillant vers le haut (115), la deuxième partie d'âme (115) étant située à proximité de la première partie d'âme (105), l'ensemble d'aile comprenant en outre un élément d'interface (126) constitué d'un matériau isolant et situé entre les première et deuxième parties d'âme (105, 115), et au moins un élément de fixation (124) qui couple la deuxième partie d'âme (115), l'élément d'interface (126) et la première partie d'âme (105) à la structure de support (110).

4. Ensemble d'aile selon la revendication 3, comprenant en outre un élément de nervure (122) qui s'étend le long de et est couplé à au moins une des première et deuxième parties d'âme (105, 115).

5. Ensemble d'aile selon la revendication 3, dans lequel l'ensemble de panneaux supérieurs (102) comprend une semelle de longeron supérieure (104) qui est située à proximité de la première extrémité de la structure de support (110), la première partie d'âme (105) étant une partie de la semelle de longeron supérieure (104), et dans lequel l'ensemble de panneaux inférieurs (112) comprend une semelle de longeron inférieure (114), la deuxième partie d'âme (115) étant une partie de la semelle de longeron inférieure (114).

6. Ensemble d'aile selon la revendication 3, dans lequel un revêtement supérieur (108) est couplé à la structure de support (110) par une pluralité de premiers éléments d'âme (106), et un deuxième revêtement (118) est couplé à la structure de support (110) par une pluralité de deuxièmes éléments d'âme (116).

7. Ensemble d'aile selon la revendication 3, comprenant en outre au moins un joint de mastic (128) qui est disposé sur au moins une partie de bord d'au moins une des première et deuxième parties d'âme (105, 115).

8. Ensemble d'aile selon la revendication 3, dans lequel l'élément d'interface (126) est formé à partir d'un matière-pli isolante de fibre de verre.

9. Aéronef, comprenant:
un fuselage (306) présentant une cellule (307);
une unité de propulsion (302) qui est couplée au moins soit au fuselage (308), soit à la cellule (307); et
une paire d'ensembles d'aile selon la revendication 1.
